# EUROPEAN PATENT APPLICATION

(11) **EP 1 274 160 A2**
(43) Date of publication of application: **08.01.2003**
(21) Application number: 02013922.6
(22) Date of filing: 24.06.2002
(51) Int. Cl.: H02J 7/14

(54) **Device for protection against overvoltages generated by electromechanical systems, particularly for battery chargers with engine starters**

(30) Priority: 03.07.2001 IT PD20010159
(71) Applicant: Helvi S.p.A., 36066 Sandrigo (Vicenza) (IT)
(72) Inventor: Vendramin, Antonio, 36030 Montecchio Precalcino (Vicenza) (IT)
(74) Representative: Modiano, Guido, Dr.-Ing.

(57) **Abstract**

A device for protection against overvoltages generated by electromechanical systems, particularly for battery chargers with engine starters, comprising an electronic circuit that in turn comprises a power supply (11) for a first voltage comparator (12) with hysteresis, within which the reference values of the maximum and minimum starting voltage are defined, and for a first power interface (13) that supplies a transformer (16) to which a secondary rectifier (17) and the battery load (18) are cascade-connected.

## Description

The present invention relates to a device for protection against overvoltages generated by electromechanical systems, particularly for battery chargers with engine starters.

It is known that two kinds of battery charger with engine starter, i.e., electronic and electromechanical ones, are currently commercially available.

Electronic battery chargers ensure a stabilized output voltage and total control over the charging current, while electromechanical battery chargers have a voltage that varies according to the charge of the battery and the current is proportional to the difference between the voltage of the battery and the voltage in output from the battery charger.

The manufacture and sale of cars or vehicles in general with a constantly increasing electronic content (ABS, airbag, et cetera) has reduced the maximum voltage that can be applied to the batteries in order to avoid damaging the electronic control units that manage these devices.

The sale of electromechanical battery chargers with engine starters has therefore been penalized, indeed to avoid the risk of damaging the onboard electronics of the vehicles entailed by the voltage peaks that occur during starting.

The aim of the present invention is to provide a device which, when applied to electromechanical battery chargers with engine starters, provides protection against overvoltages induced in the electrical and electronic system of the vehicle.

Within this aim, an object of the present invention is to provide a device that can be applied to currently commercially available electromechanical battery chargers or can be associated with battery chargers during their manufacturing process.

Another object of the invention is to provide a device that has a simple structure.

Another object of the invention is to provide a device that has a low cost and can be manufactured with known technologies and systems.

This aim and these and other objects that will become better apparent hereinafter are achieved by a device for protection against overvoltages generated by electromechanical systems particularly for battery chargers with engine starters, characterized in that it comprises an electronic circuit that in turn comprises a power supply for a first voltage comparator with hysteresis, within which reference values of maximum and minimum starting voltage are defined, and for a first power interface that supplies a transformer to which a secondary rectifier and the battery load are cascade-connected.

Further characteristics and advantages of the present invention will become better apparent from the following detailed description of a preferred but not exclusive embodiment thereof, illustrated only by way of non-limitative example in the accompanying drawings, wherein:

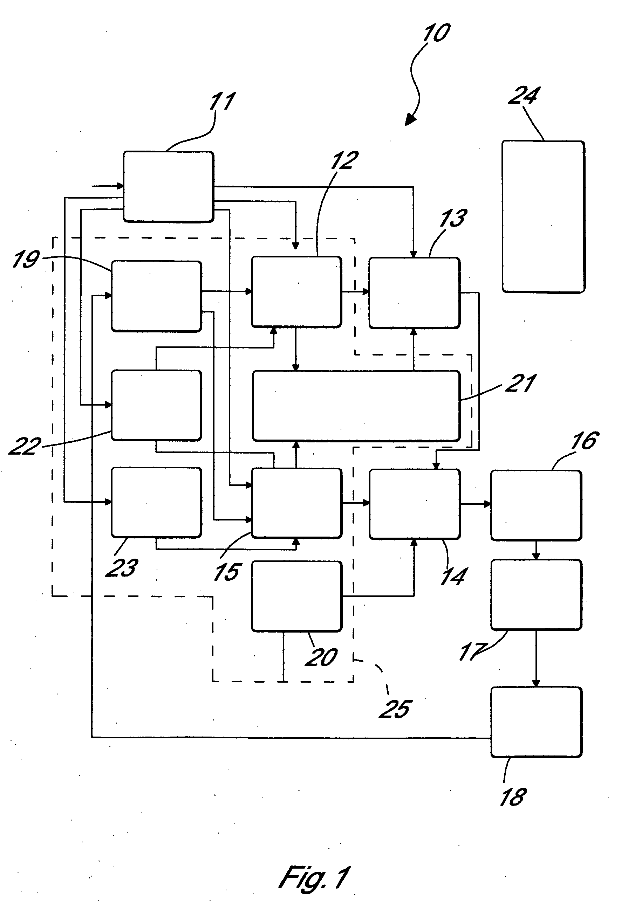

Figure 1 is a block diagram of a device according to the invention;
Figure 2 is a flowchart of the operation of the device according to the invention.

With reference to the figures, a device for protection against overvoltages generated by electromechanical systems particularly for battery chargers with engine starters, according to the invention, is generally designated by the reference numeral 10.

The device 10 comprises a power supply unit 11, which is supplied directly by the mains voltage and reduces it, uncouples it and filters it in order to obtain the supply voltages for a first comparator 12 with hysteresis and for a first power interface 13, which are in turn mutually connected, and for a voltage reference 22, for an initial reset unit 23, and for a second comparator 15 with hysteresis.

The reference values of the maximum and minimum starting voltage are defined in the first comparator 12 with hysteresis.

The minimum starting reference voltage is defined as the voltage of a battery below which the stored energy is no longer sufficient to start a generic vehicle.

The first power interface 13 is further connected to a second power interface 14, upstream of which the second comparator 15 with hysteresis is connected; the maximum and minimum charging voltage reference values are defined in the second comparator.

The expression "minimum reference voltage" defines the voltage that a battery in good condition can reach at maximum discharge, and the expression "maximum reference voltage" designates the voltage that a battery in good condition can reach at maximum charge without increasing the temperature of its casing beyond the limit values and without damaging the electronic boards of the vehicle to which it is connected.

The second power interface 14 supplies a transformer 16, which makes a charging current flow through the secondary rectifier 17 toward the battery load 18.

The battery load 18 can be constituted by one or more batteries having the same or different voltages and connected in series or in parallel.

Since there is only one pin for connecting the battery load, the device 10 has a signal adapter 19, which is interposed in the connection between the battery load 18, the first voltage comparator 12 and the second voltage comparator 15.

A temperature measurement unit 20 is further connected to the second power interface 14 and is suitable to stop the operation of the device 10 in case of overheating.

The device 10 further comprises a timer 21, to which the first comparator 12 and the second comparator 15 are connected; in turn, the timer is connected to the first power interface 13.

Advantageously, the first and second voltage comparators 12 and 15 are connected to the voltage reference 22, such references being substantially values that are proximate to the center of the hysteresis window of each comparator.

The initial reset unit 23, whose operation will be described in greater detail hereinafter, is connected to the second comparator 15.

Finally, the device 10 is provided with an overview unit 24, which is provided with a plurality of LEDs for indicating the various steps of operation.

If a load of batteries to be charged, inserted or not in a vehicle, is applied to a battery charger provided with a device 10, operation is as follows.

The power supply 11 is supplied directly by the mains voltage and in turn supplies power to the first comparator with hysteresis 12, the first power interface 13, the voltage reference 22, the initial reset unit 23, and the second comparator 15.

Before switching on the battery charger to which the device 10 is associated by means of the main switch, the battery load 18 is connected.

As soon as the battery charger is supplied, the initial reset unit 23 keeps in a safe state the first and second power interface 13 and 14 for a time that ensures the settling of the voltage references, defined in the voltage reference 22, and the outputs of the first and second voltage comparator 12 and 15.

Once initial reset has been completed, the second power interface 14 is released by the initial reset unit 23 and supplies the transformer 16, which by means of the secondary rectifier 17 makes a charging current flow toward the battery load 18.

The value of the charging current is proportional to the difference in voltage between the battery load 18 and the peak voltage rectified by the rectifier assembly 17.

Thereby, the lower the charge of the battery load 18, the higher the charging current.

The charging current causes the voltage of such batteries to increase until the maximum reference voltage is reached.

Once this value has been reached, the second comparator with hysteresis 15 disconnects, by means of the second power interface 14, the power supply from the transformer 16 and therefore from the battery load 18.

Once the maximum reference voltage has been reached, the second voltage comparator 15 is set automatically to the minimum reference voltage value in order to be able to restart with automatic charging if the battery load 18 reaches said threshold value due to natural discharge or forced discharge.

The charging state and the standby state are displayed by means of LEDs by the overview block 24 by lighting or flashing.

Throughout operation, the temperature measurement unit 20 monitors the temperature of components of the battery charger.

If one of the monitored components exceeds the temperature, the temperature measurement unit 20 sends a signal to the second power interface 14, which instantly blocks the supply of power to the battery load 18.

Overheating is indicated by the overview unit 24 by the lighting or flashing of a corresponding LED.

If used as an engine starter, through the signal adapter 19 and the first comparator 12, the battery charger provided with the device 10 waits for the starting condition.

This condition is recognized by the first comparator 12 as being above the minimum starting reference voltage and is followed by the sending of a signal to the first power interface 13 that supplies the transformer 16 and therefore the battery load 18.

In the starting condition, the voltage of the battery 18 remains below the maximum starting reference voltage throughout the time required to start the engine.

Once the engine has started, the voltage of the battery load 18 tries to reach a value equal to the peak voltage in output from the rectifier 17, such high value being necessary to supply a high current during starting.

This overstress for the electronic boards of the vehicle powered by the voltage of the battery load 18, which occurs when using electromechanical battery chargers, is avoided by the continuous supervision performed by the first comparator 12 which, when the maximum safe starting reference voltage threshold is reached disconnects, by means of the first power interface 13, the power supply to the transformer 16, eliminating the possibility of supplying power to the electronic boards of the motor vehicle with a voltage that is higher than the maximum starting reference voltage.

In particular operating conditions, for example if the battery charger has a lower charging capacity than the battery load 18 of the vehicle, in the starting condition all the current delivered by the rectifier 17 might be used to charge the batteries, delaying the transition above the safety threshold, i.e., above the maximum starting reference voltage.

In these conditions, the delivered charging current is too high as a function of the utilization time, i.e., the energy involved is too high for the battery charger and might damage the battery load 18 or cause the premature intervention of the thermal protection of the temperature measurement unit 20.

In this case, the timer 21 intervenes and after a safety period in starting conditions autonomously deactivates the first power interface 13.

The condition of intervention of the timer 21 is displayed by the overview unit 24 by lighting or flashing a corresponding LED.

After a certain time interval set in the timer 21 has elapsed, the battery charger presets itself automatically for subsequent engine starts.

Advantageously, the first and second voltage comparators 12 and 15, the signal adapter 19, the temperature measurement unit 20, the timer 21, the voltage reference 22 and the initial reset unit 23, provided by means of discrete-component electronics, can be incorporated into a single unit produced with microprocessor control, designated by the reference numeral 25.

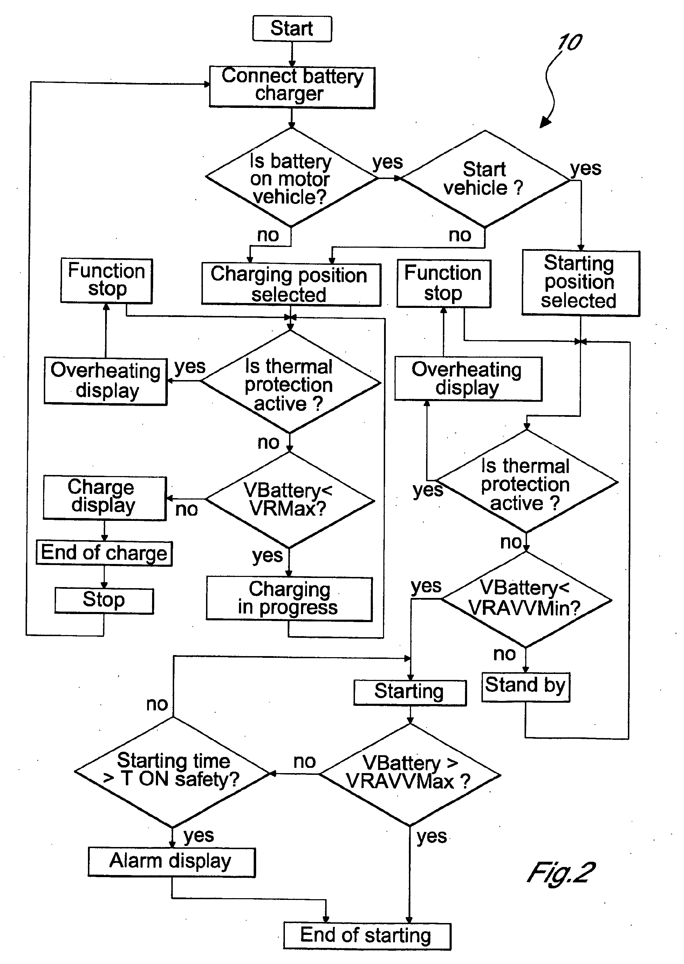

Figure 2 illustrates the flowchart of the operation of a battery charger provided with a device 10 according to the invention.

The battery charger can start a vehicle, by connecting it to the vehicle battery, or can charge a battery that is mounted or not on a motor vehicle.

When charging a battery, once the charging position has been selected, two tests are performed: one is related to the activation of the thermal protection and one is related to the condition in which the battery voltage is lower than the maximum reference voltage.

If the thermal protection is not active and the voltage of the battery is lower than the maximum reference voltage, the battery charging process starts and continues until the battery is fully charged or any component of the battery charger overheats.

When starting a vehicle, once the starting position has been selected on the battery charger, the temperature of the components of the battery charger is checked and the battery voltage and the minimum starting reference voltage are compared.

If the thermal protection is not active and the battery voltage is lower than the minimum starting reference voltage, starting begins.

When the voltage of the battery exceeds the value of the maximum starting reference voltage, starting is ended.

If instead the voltage of the battery is not higher than the maximum starting reference voltage, starting continues until the starting time exceeds a safe starting interval, otherwise the alarm is displayed and starting is ended.

In practice it has been found that the present invention has achieved the intended aim and objects.

It is in fact evident that a device has been provided which, when applied to electromechanical battery chargers with engine starters, allows their safe use with all kinds of vehicle, including vehicles with a high content of electronic components, while keeping the cost of the solution lower than the cost of the electronic system and making it adaptable to all single- and three-phase battery chargers.

The device according to the invention can of course be associated with battery chargers that are already commercially available or can be fitted directly during the manufacture of electromechanical battery chargers.

The present invention is susceptible of numerous modifications and variations, all of which are within the scope of the appended claims.

The technical details may be replaced with other technically equivalent elements.

The materials, so long as they are compatible with the contingent use, as well as the dimensions, may be any according to requirements.

The disclosures in Italian Patent Application No. PD2001A000159 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for protection against overvoltages generated by electromechanical systems particularly for battery chargers with engine starters, **characterized in that** it comprises an electronic circuit that in turn comprises a power supply for a first voltage comparator with hysteresis, within which the reference values of the maximum and minimum starting voltage are defined, and for a first power interface that supplies a transformer to which a secondary rectifier and the battery load are cascade-connected.

2. The device according to claim 1, **characterized in that** said battery load is constituted by one or more series- or parallel-connected batteries having identical or different voltages.

3. The device according to claim 1, **characterized in that** said circuit comprises a signal adapter interposed in the connection between said battery load and said first voltage comparator.

4. The device according to claim 1, **characterized in that** it comprises a temperature measurement unit that is suitable to stop the operation of said device in case of overheating.

5. The device according to one or more of the preceding claims, **characterized in that** it comprises a timer for deactivating said first power interface if the delivered current is too high as a function of the utilization time.

6. The device according to one or more of the preceding claims, **characterized in that** it comprises a second voltage comparator with hysteresis, which is supplied by said power supply and in which the maximum and minimum reference values of the charging voltages are defined, and is connected upstream to said signal adapter and downstream to a second power interface which is in turn connected to said transformer, said second comparator with hysteresis being connected to said timer and said second power interface being cascade-connected to said first power interface.

7. The device according to one or more of the preceding claims, **characterized in that** said temperature measurement unit is connected to said second power interface.

8. The device according to one or more of the preceding claims, **characterized in that** it comprises a voltage reference which is supplied by said power supply and is connected to said first and second voltage comparators.

9. The device according to one or more of the preceding claims, **characterized in that** it comprises an initial reset unit, which is supplied by said power supply and is suitable to keep in a safe state said first and second power interface for a time that ensures the settling of the voltage references, and the outputs of said first and second voltage comparators with hysteresis.

10. The device according to one or more of the preceding claims, **characterized in that** said signal adapter, said first and second voltage comparator, said timer, said voltage reference, said temperature measurement unit and said initial reset unit are constituted by a single microprocessor-controlled unit.

11. The device according to one or more of the preceding claims, **characterized in that** it comprises an overview unit with LEDs for indicating the various steps of operation.
